# EUROPEAN PATENT SPECIFICATION

(11) **EP 4 462 805 B1**
(45) Date of publication and mention of the grant of the patent: **14.01.2026**
(21) Application number: 23305753.8
(22) Date of filing: 12.05.2023
(51) Int. Cl.: H04Q 9/00, G08C 25/00, H01M 10/42, H01M 10/48

(54) **A BATTERY MANAGEMENT SYSTEM**
BATTERIEVERWALTUNGSSYSTEM
SYSTÈME DE GESTION DE BATTERIE

(43) Date of publication of application: 13.11.2024
(73) Proprietor: NXP B.V., 5656 AG Eindhoven (NL)
(72) Inventor: Martinez, Vincent Pierre, 31023 Toulouse cedex 1 (FR); Kambham, Taraka Rama Chandra Reddy, 5656 AG Eindhoven (NL)
(74) Representative: Schmütz, Christian Klaus Johannes

(56) References cited:
- EP-A1- 4 092 863
- EP-A1- 4 093 045

## Description

### Field

The present disclosure relates to a wireless battery management system, and particularly a battery management system for a vehicle, that uses a remote antenna to improve the performance of the wireless battery management system.

### Summary

According to a first aspect of the present disclosure there is provided a battery management system, comprising:
a battery pack enclosure that contains:
   a plurality of battery cells;
   a master controller, with an associated master antenna;
   a plurality of slave controllers, each with an associated slave antenna, wherein each of the plurality of slave controllers is associated with one or more of the plurality of battery cells;
wherein each of the plurality of slave controllers is configured to communicate wirelessly with the master controller using their respective antennas over one of a plurality of wireless channels;
wherein the battery management system further comprises:
   a remote antenna, which is located remote from the master antenna such that it is less shielded by the battery pack enclosure to interference that is external to the battery pack enclosure; and
   a controller that is configured to:
      receive signalling from the remote antenna;
      process the signalling received from the remote antenna to determine a level of interference in the plurality of wireless channels; and
      based on the determined level of interference in the plurality of wireless channels, select one of the plurality of wireless channels for wireless communication between the master controller and the plurality of slave controllers.

Use of such a remote antenna can provide an advantage that interference can be detected by the remote antenna earlier than it would be detected by the master antenna, especially for scenarios in which the battery management system gradually gets closer to an interference source.

In one or more embodiments, the controller is configured to:
process the signalling received from the remote antenna to determine the level of interference in the plurality of wireless channels by determining the power level of signalling in each of the plurality of wireless channels.

In one or more embodiments, the controller is configured to:
process the signalling received from the remote antenna to determine the level of interference in the plurality of wireless channels by decoding signalling in each of the plurality of wireless channels to determine future usage characteristics of the wireless channel

In one or more embodiments, the battery pack enclosure is metal.

In one or more embodiments, the remote antenna is located outside of the battery pack enclosure.

In one or more embodiments, the remote antenna is located inside the battery pack enclosure.

In one or more embodiments, the controller is further configured to:
cause the remote antenna to transmit signalling that reserves the selected one of the plurality of wireless channels, wherein the signalling optionally includes a preamble signal.

In one or more embodiments, the controller is configured to:
cause the remote antenna to transmit the same signalling that is communicated wirelessly between the master controller and one or more of the slave controllers in order to reserve the selected one of the plurality of wireless channels.

In one or more embodiments, the controller is configured to:
cause the remote antenna to transmit the signalling to reserve the selected one of the plurality of wireless channels using the same wireless protocol as that used for wireless communication between the master controller and one or more of the slave controllers.

In one or more embodiments, the controller is configured to:
cause the remote antenna to transmit the signalling to reserve the selected one of the plurality of wireless channels before a wireless communication between the master controller and one or more of the slave controllers.

In one or more embodiments, the controller is configured to:
cause the remote antenna to transmit the signalling that reserves the selected one of the plurality of wireless channels using a wireless protocol that is different to a wireless protocol that is used for communication between the plurality of slave controllers and the master controller.

In one or more embodiments, the controller is configured to cause the remote antenna to transmit WiFi signalling to reserve the selected one of the plurality of wireless channels. The plurality of slave controllers and the master controller may be configured to communicate using Bluetooth.

In one or more embodiments, the controller is configured to:
cause the remote antenna to transmit the signalling to reserve the selected one of the plurality of wireless channels before, optionally immediately before, a wireless communication between the master controller and one or more of the slave controllers.

In one or more embodiments, the controller is configured to:
cause the remote antenna to transmit the signalling to reserve the selected one of the plurality of wireless channels such that it overlaps with a wireless communication between the master controller and one or more of the slave controllers; and
wherein a portion of the signalling transmitted by the remote antenna to reserve the selected one of the plurality of wireless channels that overlaps with the wireless communication between the master controller and one or more of the slave controllers is not at the same frequency as the selected wireless channel.

In one or more embodiments, the controller is configured to:
cause the remote antenna to transmit the signalling that reserves the selected one of the plurality of wireless channels using multiple wireless protocols, at least one of which is different to a wireless protocol that is used for communication between the plurality of slave controllers and the master controller.

In one or more embodiments, the controller is configured to:
cause the remote antenna to transmit the signalling that reserves the selected one of the plurality of wireless channels using multiple wireless protocols sequentially.

According to a further aspect of the present disclosure, there is provided a method of operating a battery management system, the battery management system comprising:
a battery pack enclosure that contains:
   a plurality of battery cells;
   a master controller, with an associated master antenna; and
   a plurality of slave controllers, each with an associated slave antenna, wherein each of the plurality of slave controllers is associated with one or more of the plurality of battery cells;
wherein each of the plurality of slave controllers is configured to communicate wirelessly with the master controller using their respective antennas over one of a plurality of wireless channels;
wherein the battery management system further comprises:
   a remote antenna, which is located remote from the master antenna such that it is less shielded by the battery pack enclosure to interference that is external to the battery pack enclosure; and
wherein the method comprises:
   receiving signalling from the remote antenna;
   processing the signalling received from the remote antenna to determine a level of interference in the plurality of wireless channels; and
   based on the determined level of interference in the plurality of wireless channels, selecting one of the plurality of wireless channels for wireless communication between the master controller and the plurality of slave controllers.

Document EP 4 093 045 A1 represents an example of the prior art.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows schematically the transition from wired battery management systems to wireless battery management systems;
Figure 2a shows how the level of attenuation varies with frequency for an antenna pair that is located in a mock-up battery pack;
Figure 2b shows a zoomed-in view of part of the plot of Figure 2a;
Figure 3 shows how the PER (packet error rate) performance varies for adjacent BLE channels for tests performed with a device in a mock-up battery pack;
Figure 4 shows a wireless battery management system, which is similar to the right-hand side of Figure 1, along with three interferers;
Figure 5 shows a wireless battery management system (WBMS) according to an example embodiment of the present disclosure;
Figure 6 shows a timeline for interference detection and channel selection for the WBMS of Figure 5;
Figure 7 shows a WBMS according to another example embodiment of the present disclosure;
Figure 8 illustrates a synchronous repeat strategy;
Figures 9a and 9b show two examples of a remote sending (reservation) prefix strategy, which uses the same technology / type of wireless communication;
Figures 10a and 10b show examples of a remote sending (reservation) prefix strategy, which uses different technologies / types of wireless communication;
Figure 11 shows an example where multiple reservation messages can be encapsulated; and
Figure 12 shows an example embodiment of a method of operating a WBMS according to the present disclosure.

### Detailed Description

Wireless BMS (WBMS) relates to the concept of replacing wired control links of BMS (Battery Management System) modules with wireless connections.

In order to have minimal impact on the rest of the system, the wireless link should meet a comparable performance level as the wired link, for example in terms of latency (e.g. maximum 20 ms), throughput (e.g. more than 1 Mbps), and robustness (e.g. reaching PER (packet error rate) performance lower than 10⁻⁶ or below).

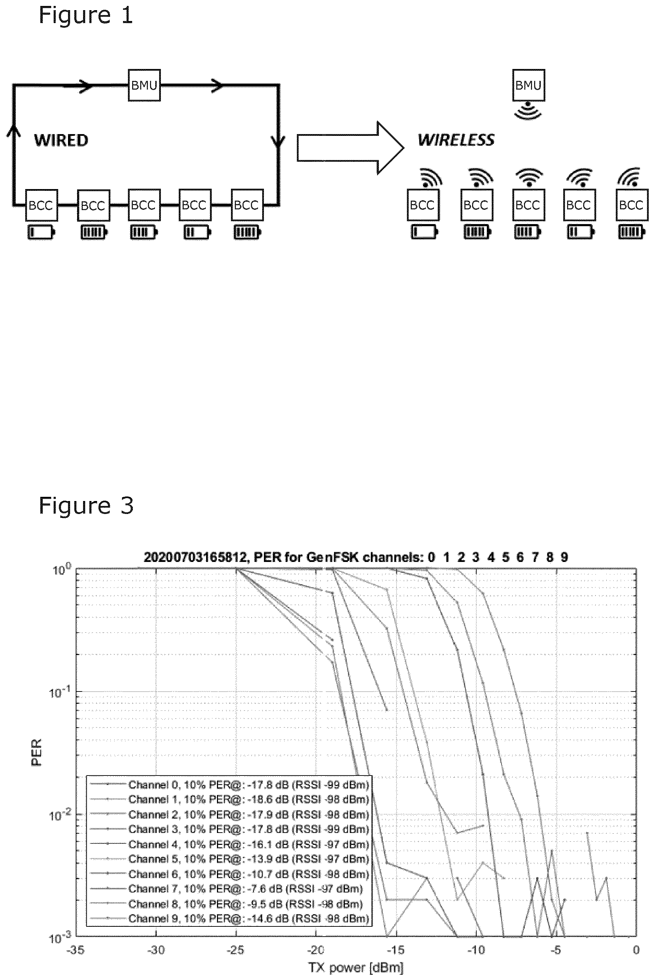

Figure 1 shows schematically the transition from wired battery management systems to wireless battery management systems.

A wireless approach can have the following advantages:
- Increased mechanical robustness (cables are prone to break)
- Less space and weight in the battery pack
- Higher data rate than a typical wired bus
- Better battery assembly automation, because there can be less need for human intervention when assembling a wireless system.

Typically, WBMS is realized with narrow-band technologies, such as 2.4 GHz Bluetooth Low Energy (BLE) protocol and proprietary variations thereof.

The examples in the following description use 2.4 GHz narrow-band technologies (e.g., BLE or proprietary variations thereof). Such systems operate in the 2.4 GHz ISM band and define channels, sometimes also referred to as subchannels, (for example BLE defines 40 RF 2-MHz wide channels in the range 2402 - 2480 MHz, NXP GenFSK defines 127 RF channels in the range 2360 - 2486 MHz). However, it will be appreciated that any known wireless protocols can additionally or alternatively be used. Such protocols provide a plurality of wireless channels, which each correspond to a predetermined range of frequencies.

It was also made clear that channel sounding is of prime importance. It has been found that the attenuation of the wireless signals is very dependent on the narrow-band (BLE or GenFSK) channel chosen due to the high frequency-selectiveness of the medium in certain applications. This can be especially the case of WBMS, where a battery pack enclosure is used that is made out of metal, and thereby provides a highly reflective environment. It has been found that by shifting the carrier frequency by only 2 MHz higher or lower, a very different response can be observed.

The terminology that is used in Figure 1 and some of the other figures is: "BMU" (Battery Management Unit) and "BCC" (Battery Cell Controller). A BCC in the context of the present disclosure can also be referred to as a CSU (cell support unit) or a CMU (cell management unit). More generally, a BMU can be considered as a master controller and a BCC can be considered as a slave controller. In various examples, the master controller can be considered as a master node of a star wireless network topology, and a slave controller can be considered as a slave connecting node. As shown in Figure 1, each of the BCCs is associated with one or more of a plurality of battery cells.

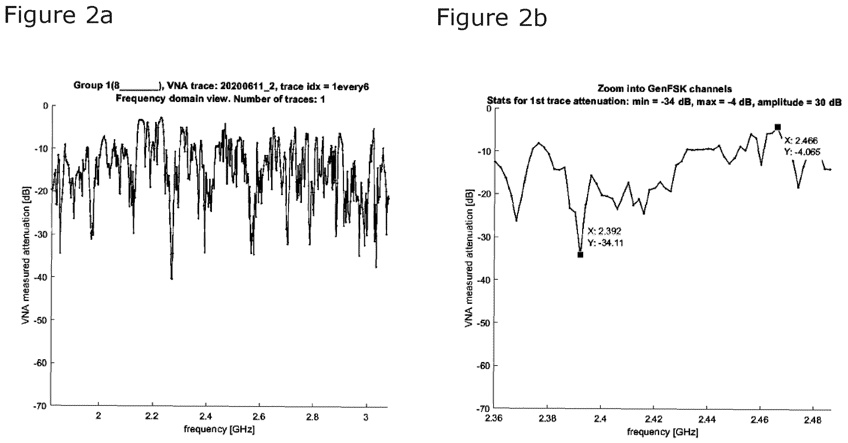

Figure 2a shows how the level of attenuation varies with frequency for an antenna that is located in a battery pack enclosure mockup. Frequency is shown on the horizontal axis over a frequency range of 1.8 GHz to about 3.1 GHz. The attenuation, in dB, is shown on the vertical axis, as measured by a vector network analyzer (VNA). Figure 2b shows a zoomed-in view of part of the plot of Figure 2a, over a frequency range of 2.36 GHz to about 2.48 GHz.

Figure 2b shows that delta in attenuation within the BLE / GenFSK channels range can reach more than 30 dB.

Figure 3 shows a plot of PER (packet error rate) for tests performed with a device in a mock-up battery pack.

The vertical axis shows the PER (Packet Error Rate) of a receiver, whereby lower values are better. A PER of 10^0 (=1) means that all packets failed. Absence of a plot in Figure 3 means that there was no error recorded. The horizontal axis is used to test different conditions - in this case it is the transmit (TX) power. The right side of each PER plot means lower delta, so we expect better performance compared to the left side. The number of packets simulated in this example is 2000.

The performance of 10 consecutive channels (with index 0-9) is shown in Figure 3. A large spread of performance is visible, even though only 10 channels are shown. It can therefore also be seen that performance spread, in terms of PER performance, can be vastly different for consecutive or close by frequency channels.

Furthermore, for BMSs in a vehicle, the characteristics of the channels are expected to vary over time due to aging, temperature change and interferences from external wireless systems.

Interference can arise from one or more of numerous different sources. Especially when considering usage of narrow-band wireless channels within the 2.4 GHz ISM band, interference can originate from one or more of the following wireless systems that are nearby, for example but not limited to:
- 2.4 GHz WiFi (IEEE 802.11), which could be from a WiFi source that is within the cabin of the vehicle or it could be from an external source such as a nearby house, store, etc.
- IEEE 802.15.4
- Bluetooth
- BLE
- Zigbee

This ISM band is very commonly used by various wireless communication technologies because it is unlicensed. It can be almost crowded in certain urban locations.

The below table lists example interfering technologies that are considered the most likely to be present and have the highest impact in the ISM band.

| Interfering RF technology | Likelihood source | | Future Trend | Impact (estimation) | |
|---|---|---|---|---|---|
| | Within vehicle | Outside vehicle | | Within vehicle | Outside vehicle |
| Wi-Fi | Intermediate | High | Higher | High | Intermediate |
| Bluetooth | Intermediate | Low | Higher | Intermediate | Low |
| BLE | Intermediate | Low | Higher | Low/ Intermediate* | Low |
| IEEE 802.15.4 | Low | Low | Same | Intermediate/ High* | Low/ Intermediate* |

| | | | | | |
|---|---|---|---|---|---|
| *Higher impact, when on the same channel and no channel hopping is used by both the technology under test and the interferer. | | | | | |

An automotive battery pack can include an enclosure / housing. Provided within the enclosure can be: one or more cells, a plurality of slave controllers (BCCs), a cooling structure and a master controller (BMU).

The amount of interference from the outside world that reaches the WBMS modules inside the battery pack depends on the battery enclosure material, shape, thickness and positioning inside the car.

A metal material, in some examples a ferromagnetic metal, can be used for the battery enclosure, with a thickness of about 1.5 mm. Such battery enclosures result in attenuation of 20 to 40 dB, depending on the thickness of the metal cover.

The chance that interfering messages share the same underlying physical nature (waveform and channel access) are extremely thin. For instance, if the WBMS network is based on BLE or GenFSK, Zigbee or WiFi interference can appear random in comparison, e.g., in terms of when it starts etc. Thus, it is very difficult, if not impossible, to track and predict with WBMS channel selection procedures.

Furthermore, if the deployed narrow-band WBMS protocol is a form of customized and optimized BLE (such as GenFSK), it will likely be time-slotted. This can result in some of the channel access procedures of BLE being dropped, thereby making the problem even worse.

This means that the interference that is generated externally of the battery pack can appear random to the WBMS inside the battery pack. Such interference causes a threat to the integrity of the WBMS messages, as a channel sounding mechanism can only be an averaged view of the past; it cannot give guarantee of future protection.

One possible way of mitigating interference and wireless channel impairments is use of frequency hopping, such as the one used by the Bluetooth LE standard. The frequency hopping strategy is a trial-and-error type of scheme. This strategy is reactive. For each link, a subset of the BLE channels can be used. If a message cannot get decoded correctly at the receiver, then the transmitter will schedule its retransmission (and subsequent messages) using another channel from a subset of defined channels. This type of reactive approach will require retransmissions which can affect latency, and cannot ensure a low enough PER (typically BMS is targeting 10⁻⁶ PER).

Another possible approach is to perform background channel sensing. This approach can involve background sounding of the channels for better PER performance, in which a selected fixed channel is used that is then changed when a better performing channel is identified. This strategy is proactive, in contrast to the BLE approach that doesn't change channels as long as there is no packet error. However, this strategy requires a background-running channel sounding in order to identify the better preforming channel(s). Nonetheless, this approach cannot ensure future protection of the messages. Furthermore, it can be bad for power consumption and bandwidth, due to the overhead of sending additional packets.

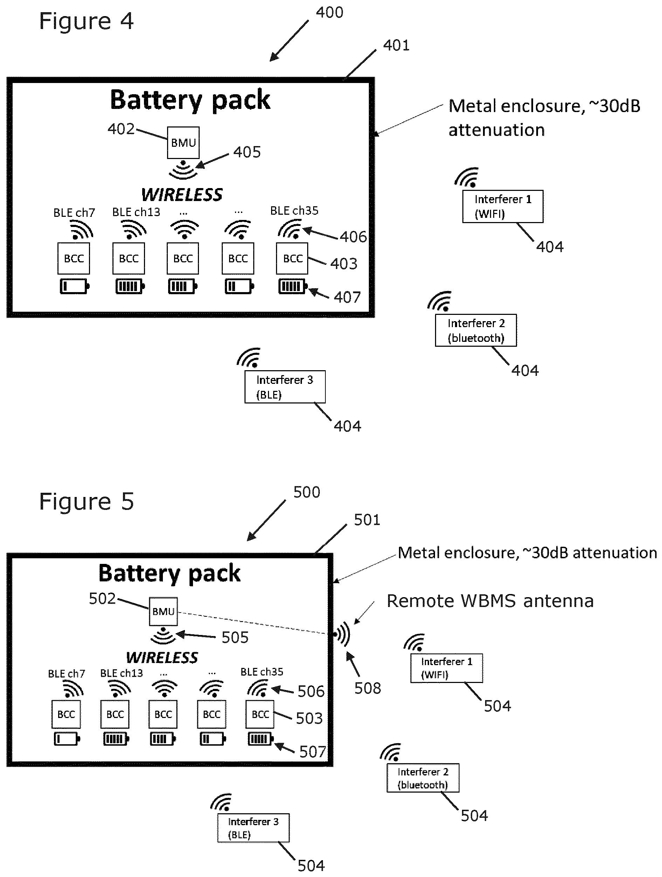

Figure 4 shows a battery management system 400, which is similar to the right-hand side of Figure 1, along with three interferers 404.

The battery management system 400 includes a battery pack enclosure 401. Inside the battery pack enclosure 401 are: a plurality of battery cells (represented schematically in Figure 4 with reference 407); a master controller (BMU) 402, with an associated master antenna 405; and a plurality of slave controllers (BCCs) 403, each with an associated slave antenna 406. Each of the plurality of slave controllers (BCCs) 403 is associated with one or more of the plurality of battery cells 407.

Each of the plurality of slave controllers (BCCs) 403 is configured to communicate wirelessly with the master controller (BMU) 402 using their respective antennas 405, 403 over one of a plurality of wireless channels. Such channels can represent a pre-allocated frequency range, as is known in the art. As indicated above, in this example the channels are narrowband channels.

Three interferers 404 are shown in Figure 4. One of the interferers 404 is transmitting WiFi signalling, another is transmitting Bluetooth signalling, and the third is transmitting BLE signalling. As illustrated in Figure 4, the battery pack enclosure 401 can provide about 30 dB attenuation to the interference signalling before it reaches the BMS system inside the battery pack enclosure 401.

Figure 5 shows a battery management system (BMS) 500 according to an example embodiment of the present disclosure. Features of Figure 5 that are also shown in Figure 4 have been given corresponding reference numbers in the 500 series and will not necessarily be described in detail again here.

In the same way as Figure 4, the BMS 500 incudes a battery pack enclosure 501 that contains: a plurality of battery cells 207; a master controller (BMU) 502, with an associated master antenna 505; and a plurality of slave controllers (BCCs) 403, each with an associated slave antenna 506.

The BMS 500 of Figure 5 also includes a remote antenna 508. The remote antenna 508 is located in relation to the master antenna 505 such that it is remote from the master antenna 505. For example, the master antenna 505 and the remote antenna 508 can be the two antennas of a dual-antennas radio. The remote antenna 508 can be connected to the master controller (BMU) 502 via an RF cable. The remote antenna 508 is located such that such that it is less shielded by the battery pack enclosure 501 to interference that is external to the battery pack enclosure, such as that provided by the interferers 504 that are shown in Figure 5. As will be appreciated from the description that follows, both the master antenna 505 and the remote antenna 508 are associated with the master controller 502. The master antenna 505 can be the antenna that is typically associated with a master controller in a known WBMS, and the remote antenna 508 is newly added in order to improve the performance of the WBMS 500 shown in Figure 5.

In this example, the remote antenna 508 is located outside of the battery pack enclosure 501. Therefore, the remote antenna 508 is more directly exposed to any interference that is provided by the interferers 504 than the master antenna 505. This is because the battery pack enclosure 501 attenuates the interference (by about 30 dB in this example) before it reaches the master antenna 505. Whereas, the battery pack enclosure 501 does not provide any attenuation to the interference before it reaches the remote antenna 508.

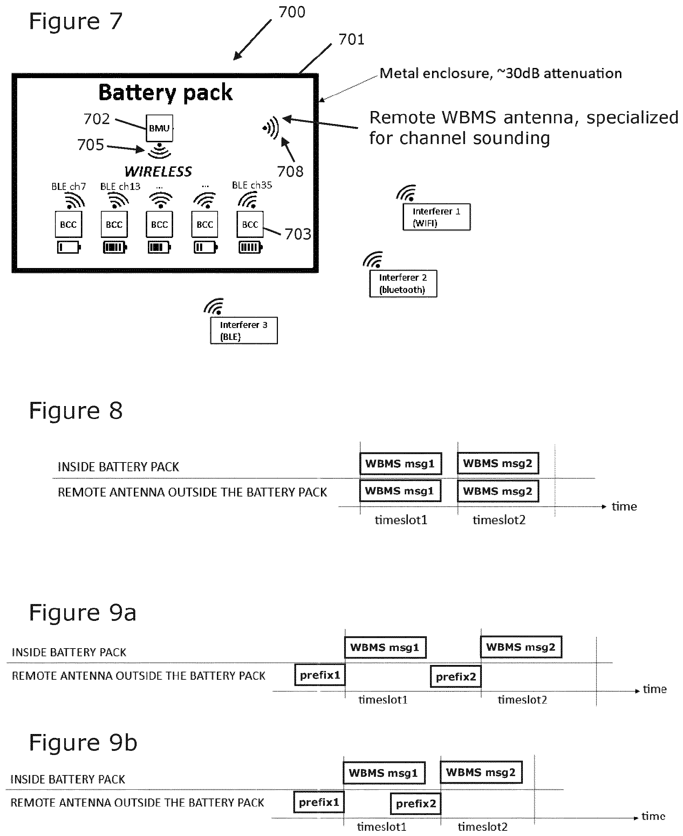

In another example, the remote antenna 508 can be located remotely from the master antenna 505, but within the battery pack enclosure 501. Such an example will be described below with reference to Figure 7.

Returning to Figure 5, the BMS 500 also includes a controller. In this example, all of the functionality of this controller is performed by the master controller 502. However, in other implementations another controller (not shown in Figure 5) may perform at least some of the functionality of this controller. The connection between the remote antenna 508 and the master controller (BMU) 502 may be wired or wireless (indeed, it could use the WBMS protocol itself).

The master controller 502 receives signalling from the remote antenna 508. The master controller 502 processes the signalling received from the remote antenna 508 to determine a level of interference in the plurality of wireless channels that are available for use in communication between the master controller (BMU) 502 and the slave controllers (BCCs) 503. Then, based on the determined level of interference in the plurality of wireless channels, the controller selects one of the plurality of wireless channels for wireless communication between the master controller (BMU) 502 and the plurality of slave controllers (BCCs) 503.

In one example, the master controller 502 can process the signalling received from the remote antenna 508 to determine the level of interference in the plurality of wireless channels by determining the power level of signalling in each of the plurality of wireless channels. Additionally or alternatively, the master controller 502 can process the signalling received from the remote antenna 508 to determine the level of interference in the plurality of wireless channels by decoding signalling in each of the plurality of wireless channels to determine ongoing and / or future usage characteristics of the wireless channel. For example, for how long the wireless channel has been reserved and therefore for how long will be occupied.

As will be discussed in detail below, use of a remote antenna 508 can provide an advantage that interference can be detected by the remote antenna 508 earlier than it would be detected by the master antenna 505, especially for scenarios in which the BMS 500 gradually gets closer to an interference source (for example, but not limited to, when approaching another WBMS-equipped vehicle, or when approaching a Wi-Fi hotspot). This is because the remote antenna 508 is not protected by the shielding of the battery pack enclosure 501. That is, the 30 dB attenuation of the battery pack enclosure 501 may prevent the nodes inside the battery pack enclosure 501 from identifying outside interference early enough to take remedial action without losing communication, especially in the case where the outside interferers are not static (e.g. pedestrian, other vehicles, WiFi hotspots etc.) and the interference is ramping up over time.

This extra antenna or device (described with reference to Figure 5 as a remote antenna 508) can be located outside of the battery pack (e.g., in the cabin of the vehicle, or in an engine bay of the vehicle), to provide more accurate interference sounding measurements back to the master controller (BMU) 502. The remote antenna 508 can be considered as operating as a sniffer. In this way, the remote antenna 508 provides an advanced sensing and sounding mechanism. For the example of Figure 5, where the remote antenna 508 is located outside of the battery pack enclosure, it will see the interference with a ~30 dB boost compared to inside the battery pack enclosure. Thereby, it will be able to see interference growing and building up before it impairs the WBMS transmissions within the battery pack enclosure 501 such that action can be taken by the WBMS system inside the battery pack enclosure 501 to change channels early enough.

This does not preclude an extra antenna (or device) also being mounted inside the battery pack enclosure 501, in addition to the other 'regular' nodes within the battery pack enclosure 501, as will be described below. It can monitor the traffic of the WBMS and can act as feedback to the master controller (BMU) 502. It can also recommend the interference free frequencies based on the sniffer data.

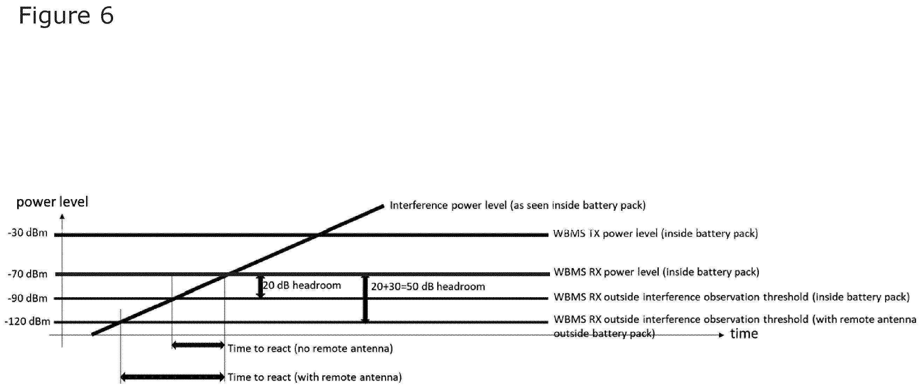

Figure 6 shows a timeline for interference detection and channel selection for the BMS of Figure 5. In Figure 6, power level is shown on the vertical axis and time is shown on the horizontal axis. The diagonal line that is shown in Figure 6 represents the interference power level increasing over time, and the intersection with the various horizontal lines indicates the times at which different power levels associated with the BMS are triggered.

Figure 6 shows that the usage of a remote antenna outside of the battery pack enclosure allows interference to be detected earlier. In other words, use of the remote antenna buys some time for the WBMS system to react to the interference, and potentially change channels, before undergoing packet losses due to the interference. This is illustrated by the two different times to react that are shown at the bottom of Figure 6 (one with the remote antenna and the other without the remote antenna).

Figure 7 shows a BMS 700 according to another example embodiment of the present disclosure. Features of Figure 7 that are also shown in Figure 5 will not necessarily be described in detail again here.

In Figure 7, the remote antenna 708 is located inside the battery pack enclosure 701. In the same way as Figure 5, the remote antenna 708 is nonetheless located remote from the master antenna 705 such that it is less shielded by the battery pack enclosure 701 to interference that is external to the battery pack enclosure 701.

For example, the remote antenna 708 can be located nearer to a surface of the battery pack enclosure 701 than the master antenna 705 such that it is exposed to external interference sooner than the master antenna 705. In other words, at any instant in time the power level of external interference that is detected by the remote antenna 708 is higher than that detected by the master antenna 705.

In another example, the remote antenna 708 can be located in the vicinity of a "window" (not shown) in the battery pack enclosure 701. The window represents a portion of the battery pack enclosure 701 with a shielding effect on external interference that is (potentially purposely) reduced when compared with other portions of the battery pack enclosure. In which case, the master antenna 705 can be located further away from the window than the remote antenna 708. In some examples, the remote antenna 708 may have a direct line of sight to the window but the master antenna 705 does not. The window can be provided as a different material to that used for the majority of the battery pack enclosure 701. In one implementation, the majority of the battery pack enclosure 701 can be made of metal (that attenuates the signals at frequencies of interest by about 30 dB as discussed above) and the window can be made of a different material that attenuates the signals at frequencies of interest by a lower amount.

Locating the remote antenna 708 inside the battery pack enclosure in this way enables it to be used as a dedicated device that performs channel sounding and measurements that can be used for a channel selection process for communication between the master controller (BMU) 702 and the slave controllers (BCCs) 703.

The functionality that is described above can be considered as mounting and using one or more WBMS remote antennas and using them as receiving nodes. In this way, they can be considered as sniffers. The WBMS that is within the battery pack enclosure can the use the signalling that is detected by the remote antenna to select one of a plurality of wireless channels for wireless communication between the master controller (BMU) and the plurality of slave controllers (BCCs) in such a way that the negative effects of the interference are mitigated.

We will now describe an extension to this functionality in which the remote antenna is used as an active transmit node, or even as a more sophisticated system comprising both parts of a modem/device (transceiver and antenna). In this way the remote antenna or the antenna with its associated system (which might be referred to as a "radio" or modem), which can be located outside of the battery pack enclosure, can be used to transmit messages to enable more advanced aggressive strategies for ensuring that wireless communication within the battery pack enclosure is not disrupted by interference that is external to the battery pack enclosure. For instance, if the interference is mostly WiFi, the remote antenna can send messages in WiFi format (for instance a WiFi preamble such as that used in V2X (vehicle-to-everything) ETSI ITS-G5 co-channel coexistence) to act as a channel reservation message. This can avoid other stations or protocols from utilising the medium while the WBMS system is operating.

The goal is to secure a wireless channel that can be used for WBMS transmissions for a certain timeframe by proactively sending some reservation messages that can be detected by the interference sources. It is beneficial to have those messages sent by the remote antenna, as opposed to the master antenna, because the master antenna is more shielded by the battery pack enclosure than the remote antenna. The interference sources can process the reservation messages such that they avoid using the wireless channel that is to be reserved for the WBMS inside the battery pack enclosure. The strategy is to have the remote antenna send a signal to decrease the chances of other devices transmitting signalling that results in interference to the WBMS inside the battery pack enclosure.

We will now describe various strategies that can be used for causing the remote antenna to transmit signalling that reserves the selected one of the plurality of wireless channels for use by the WBMS. These strategies can be used in conjunction with each other.

Figure 8 illustrates a synchronous repeat strategy. According to this strategy, the controller causes the remote antenna to transmit the same signalling that is communicated wirelessly between the master antenna and one or more of the slave antennas in order to reserve the selected one of the plurality of wireless channels.

If the WBMS master controller is sending a message, then the same message is also synchronously sent by the remote antenna. As shown in the figure, both the master controller (inside the battery pack) and the remote antenna (which in this example is outside the battery pack) transmit the same messages in the same timeslots, using the same frequency channel and packet structure. If an interfering wireless system is using some kind of channel sounding or CSMA/CA (Carrier-sense multiple access collision avoidance) channel access scheme, then it may identify this narrowband channel as being unavailable, thereby decreasing the chance that an interfering signal is launched. This is because the signal transmitted by the remote antenna will be perceived to have higher power than the corresponding signal that is transmitted by the master antenna. For the example of Figure 5, it will have a 30 dB boost compared to the signal originating from inside the battery pack.

Figures 9a and 9b show two examples of a remote (reservation) prefix strategy, which uses the same technology / type of wireless communication. According to this strategy, the controller uses the remote antenna to transmit the preamble signal to reserve the channel for an upcoming period of time. Furthermore, the remote antenna transmits the signalling to make an immediate reservation of the selected one of the plurality of wireless channels before (in this example immediately before, but that need not be the case) a wireless communication between the master antenna and one or more of the slave antennas.

If the WBMS is organized as a time-slotted system, as shown in Figures 9a and 9b, the remote antenna can send a 'blocking' signal (in this example as a message using the same technology as the WBMS internal messages), before the time of the actual message. The transmitted signal may be a default message, or (only) a preamble type of signal. In this example, the remote antenna and the WBMS system are accurately time-synchronized so that the blocking signal is transmitted just prior to the WBMS message.

Figure 9a shows how a blocking message that is transmitted by the remote antenna may not overlap in time with a WBMS message that is communicated between the master controller and one or more of the slave controllers. Figure 9b shows how a blocking message that is transmitted by the remote antenna can overlap in time with the WBMS message.

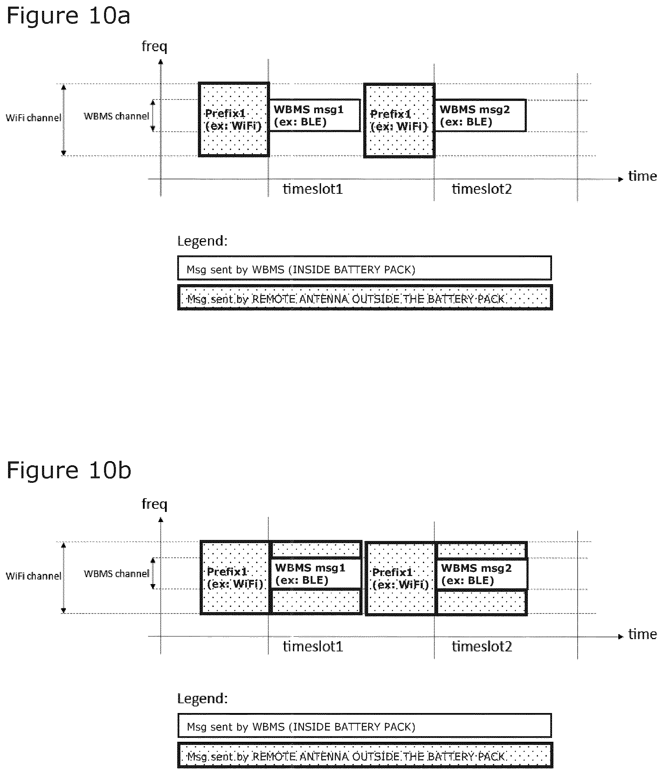

Figures 10a and 10b show examples of a remote (reservation) prefix strategy, which uses different technologies / types of wireless communication. According to this strategy, the remote antenna transmits the signalling that reserves the selected one of the plurality of wireless channels using a wireless protocol that is different to a wireless protocol that is used for communication between the plurality of slave controllers and the master controller.

Again, the WBMS represented by Figures 10a and 10b is organized as a time-slotted system and the remote antenna sends a 'blocking' signal in advance of the time of the actual message between the master controller and a slave controller. In this example, however, the blocking signal and the actual message are sent using different technologies. The transmitted signal may be a default message, or (only) a preamble type of signal. Again, the remote antenna and the WBMS system are accurately time-synchronized in this example so that the prefix is placed just prior to the WBMS message.

If some of the potential interference systems in the vicinity of the BMS use a CSMA type of channel access mechanism (for example: IEEE 802.11, IEEE 802.15.4), then the remote antenna can send a valid message that acts as a reservation of a channel that is intended to be used by the WBMS (for example: for IEEE 802.11, either in the form of CTS-to-self message (clear-to-send-to-self) or as only sending the header).

Various types of reservation messages can be used to "reserve" the channels. Here are a few non-limiting examples:
- The reservation message can, for instance, be a IEEE 802.11 CTS-to-self type reservation of the channel. This technique is for example used in another multi-tech coexistence scenario (such as V2X).
- The reservation message may be implicit and may consist of only BLE or IEEE 802.11 preamble and data header type of information (i.e., just sending an indication of a hypothetical packet).

Additionally for this option:
i. The data section may be empty.
ii. The data section may be filled with 'valid' content - except that the 2 MHz bandwidth used by the WBMS system has been filtered out. This should not alter the capability of receivers to decode the message, yet can avoiding sending interference from the remote antenna to the associated WBMS system.

According to this strategy, the remote antenna can transmit WiFi signalling (e.g. a WiFi preamble) to reserve the selected one of the plurality of wireless channels. The plurality of slave controllers and the master controller can communicate using a different technology, such as Bluetooth.

As shown in Figure 10a, the remote antenna can transmit the signalling to reserve the selected one of the plurality of wireless channels before (in this example immediately before) a wireless communication between the master antenna and one or more of the slave antennas.

As shown in Figure 10b, the remote antenna can transmit the signalling to reserve the selected one of the plurality of wireless channels such that it overlaps with a wireless communication between the master controller and one or more of the slave controllers. Optionally (as shown in Figure 10b), the portion of the signalling that is transmitted by the remote antenna to reserve the selected one of the plurality of wireless channels that overlaps with the wireless communication between the master antenna and one or more of the slave antennas excludes the frequency of the selected wireless channel. That is, it is not at the same frequency as the selected wireless channel.

By way of note on the decodability of the message packets sent by the remote antenna to a standard receiver - it should be noted that due to the WiFi interleaver that shuffles bits in the frequency direction, having a 1 or 2 MHz wide notch over a 20 MHz (or even larger) OFDM-based WiFi signal shouldn't present problem for WiFi receivers to receive and even decode this packet (even if they don't really need to).

By way of note on the power levels message packets sent by the remote antenna and those communicated between the master controller and the slave controllers - it might be that, from the perspective of the interferer, the (reservation) packets received from the remote antenna have very different power levels to the WBMS packets. This could be due to the attenuation of the battery pack enclosure and / or because the WBMS packets are not transmitted at full power. In certain cases, this might lead to undesirable effects, such that it can be beneficial to adapt the power level of the reservation packets that are transmitted by the remote antenna.
- The reservation message can be a wake-up packets, to address certain types of nodes.
- Multiple reservation messages can be encapsulated / nested to address the case where the potential or actual interferers implement several different technologies.

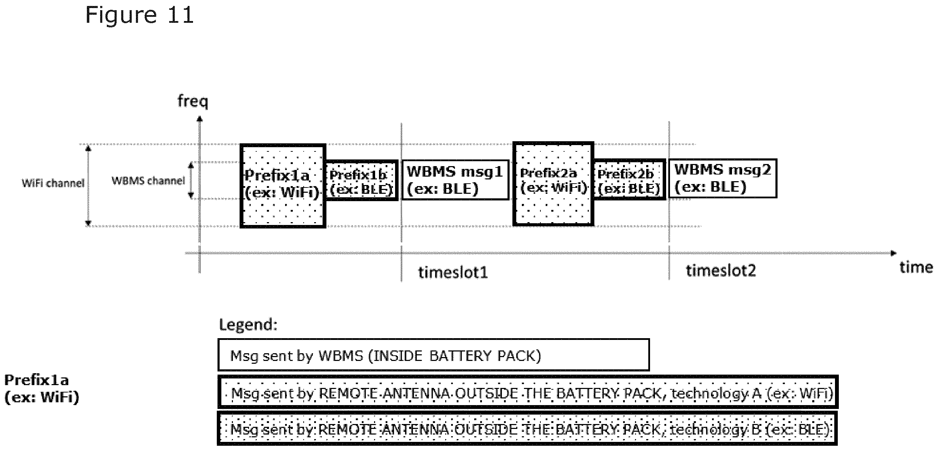

Figure 11 shows an example where multiple reservation messages can be encapsulated. Figure 11 provides an example with 2 technologies, but the concept can be extended to any number of technologies. One or more of the "reservation" messages may or may not overlap in time with the WBMS messages.

According to this strategy, the remote antenna transmits the signalling that reserves the selected one of the plurality of wireless channels using multiple wireless protocols. At least one of which can be different to a wireless protocol that is used for communication between the plurality of slave controllers and the master controller. The remote antenna can transmit the signalling that reserves the selected one of the plurality of wireless channels using multiple wireless protocols sequentially, as shown in Figure 11 - i.e., one after the other such that they are not overlapping in time. In another example, the remote antenna can transmit the signalling that reserves the selected one of the plurality of wireless channels using multiple wireless protocols in parallel, not shown in the drawings - i.e., such that they overlap in time.

By way of note on the capability of the remote antenna to send multiple reservation messages - since the two technologies might be of a different nature (e.g., BLE and WiFi), it might be that the remote antenna is connected to different modems (one per technology). Another option is using a software-defined radio (SDR) type of platform that is able to send both such signals. Yet another option would be that the most 'advanced technology' is able to mimic the transmission of the 'simpler' technology.

One or more of the examples described herein including the mounting and usage of a WBMS remote antenna, to provide an enhanced measurement of interference. The remote antenna can either be used as a pure receiver antenna (e.g., a sniffer), or it can be used as an active transmit node. The antenna can be located outside of the battery pack (e.g., in the cabin, or in the engine bay), to provide more accurate interference sounding measurements back to the BMU. This remote antenna can primarily be used as a sniffer. Furthermore, the remote antenna can be used to send messages with the aim of reserving and protecting the WBMS channels.

Examples described herein can apply to wireless application protocols that
- allows usage of different narrowband channels or subchannels;
- have relative slowly changing wireless channel characteristics;
- use a star topology with a master and a high number of slave nodes, experiencing a plurality of wireless channel effects and characteristics requiring smart channel index selection to achieve desired PER performance.

In terms of application, the examples disclosed herein are not necessarily limited to wireless BMS systems. In terms of wireless technology, the following non-exhaustive list of modulation waveforms can be used:
- (Gaussian) Frequency shift keying waveforms (2.4 GHz BLE standard, GenFSK, Zigbee, etc.).

The present disclosure relates to multi-channel sensor systems, with an environment that is subject to interference. It was conceived for WBMS application, but is not limited to it. The disclosure addresses the topic of a central coordinator (e.g., BMU) reaching a plurality of distributed nodes (e.g., BCCs), for example in a round-robin fashion. Each BMU-BCC link has a distinct wireless propagation channel yielding very distinct PER and RSSI (Received Signal Strength Indicator). Wireless communication reliability is typically measured in terms of PER (Packet Error Rate) performance, and such performance can vastly change by selecting a better different (sub)channel, in particular for narrow-band (e.g., BLE) type of transmissions. Even if the battery-pack environment can be considered static (e.g., the relative position of the nodes are fixed), the wireless characteristics of the links will vary over time due to interferences originating from outside of the battery pack. This disclosure proposes a method to improve the tracking of the interference level on the various (sub)channels, and thereby the channel selection process, by means of mounting a remote antenna, which can be located outside of the battery pack. These techniques will in turn improve the PER, stability and predictability of the WBMS system.

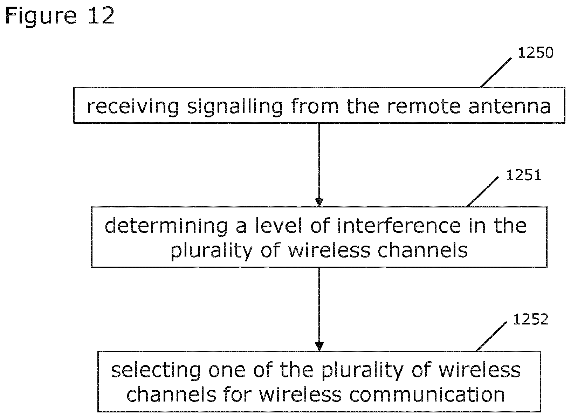

Figure 12 shows an example embodiment of a method of operating a BMS according to the present disclosure. The BMS can be any of the BMSs described herein, such that it includes a battery pack enclosure and a remote antenna. The battery pack enclosure contains: a plurality of battery cells; a master controller, with an associated master antenna; a plurality of slave controllers, each with an associated slave antenna, wherein each of the plurality of slave controllers is associated with one or more of the plurality of battery cells. Each of the plurality of slave controllers is configured to communicate wirelessly with the master controller using their respective antennas over one of a plurality of wireless channels. The remote antenna is located remote from the master antenna such that it is less shielded by the battery pack enclosure to interference that is external to the battery pack enclosure.

At step 1250, the method involves receiving signalling from the remote antenna. At step 1251, the method involves processing the signalling received from the remote antenna to determine a level of interference in the plurality of wireless channels. Then, at step 1252, based on the determined level of interference in the plurality of wireless channels, the method involves selecting one of the plurality of wireless channels for wireless communication between the master controller and the plurality of slave controllers.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

## Claims

1. A battery management system (500, 700), comprising:
a battery pack enclosure (501; 701) that contains:
a plurality of battery cells (507; 707);
a master controller (502; 702), with an associated master antenna (505; 705);
a plurality of slave controllers (503; 703), each with an associated slave antenna (506; 706), wherein each of the plurality of slave controllers (503; 703) is associated with one or more of the plurality of battery cells (507; 707);
wherein each of the plurality of slave controllers (503; 703) is configured to communicate wirelessly with the master controller (502; 702) using their respective antennas (505, 506; 705, 706) over one of a plurality of wireless channels;
wherein the battery management system (500; 700) further comprises:
a remote antenna (508, 708), which is located remote from the master antenna (505; 705) such that it is less shielded by the battery pack enclosure (501; 701) to interference that is external to the battery pack enclosure; and
a controller (502; 702) that is configured to:
receive signalling from the remote antenna (508, 708); process the signalling received from the remote antenna (508, 708) to determine a level of interference in the plurality of wireless channels; and
based on the determined level of interference in the plurality of wireless channels, select one of the plurality of wireless channels for wireless communication between the master controller (502; 702) and the plurality of slave controllers (503; 703).

2. The battery management system (500, 700) of claim 1, wherein the controller (502; 702) is configured to:
process the signalling received from the remote antenna (508, 708) to determine the level of interference in the plurality of wireless channels by determining the power level of signalling in each of the plurality of wireless channels.

3. The battery management system (500, 700) of claim 1 or claim 2, wherein the controller is configured to:
process the signalling received from the remote antenna (508, 708) to determine the level of interference in the plurality of wireless channels by decoding signalling in each of the plurality of wireless channels to determine future usage characteristics of the wireless channel

4. The battery management system (500, 700) of any preceding claim, wherein the battery pack enclosure (501; 701) is metal.

5. The battery management system (500) of any preceding claim, wherein the remote antenna (508) is located outside of the battery pack enclosure (501).

6. The battery management system (700) of any one of claims 1 to 4, wherein the remote antenna (708) is located inside the battery pack enclosure (701).

7. The battery management system (500, 700) of any preceding claim, wherein the controller (502; 702) is further configured to:
cause the remote antenna (508, 708) to transmit signalling that reserves the selected one of the plurality of wireless channels, wherein the signalling optionally includes a preamble signal.

8. The battery management system (500, 700) of claim 7, wherein the controller (502; 702) is configured to:
cause the remote antenna (508, 708) to transmit the same signalling that is communicated wirelessly between the master controller (502; 702) and one or more of the slave controllers (503; 703) in order to reserve the selected one of the plurality of wireless channels.

9. The battery management system (500, 700) of claim 7 or claim 8, wherein the controller (502; 702) is configured to:
cause the remote antenna (508, 708) to transmit the signalling to reserve the selected one of the plurality of wireless channels using the same wireless protocol as that used for wireless communication between the master controller (502; 702) and one or more of the slave controllers (503; 703).

10. The battery management system (500, 700) of claim 9, wherein the controller (502; 702) is configured to:
cause the remote antenna (508; 708) to transmit the signalling to reserve the selected one of the plurality of wireless channels before a wireless communication between the master controller (502; 702) and one or more of the slave controllers (503; 703).

11. The battery management system (500, 700) of claim 7, wherein the controller (502; 702) is configured to:
cause the remote antenna (508; 708) to transmit the signalling that reserves the selected one of the plurality of wireless channels using a wireless protocol that is different to a wireless protocol that is used for communication between the plurality of slave controllers (503; 703) and the master controller (502; 702).

12. The battery management system (500, 700) of claim 11, wherein:
the controller (502; 702) is configured to cause the remote antenna (508; 708) to transmit WiFi signalling to reserve the selected one of the plurality of wireless channels; and
the plurality of slave controllers (503; 703) and the master controller (502; 702) are configured to communicate using Bluetooth.

13. The battery management system (500, 700) of claim 11, wherein the controller (502; 702) is configured to:
cause the remote antenna (508; 708) to transmit the signalling to reserve the selected one of the plurality of wireless channels such that it overlaps with a wireless communication between the master controller (502; 702) and one or more of the slave controllers (503; 703); and
wherein a portion of the signalling transmitted by the remote antenna (508; 708) to reserve the selected one of the plurality of wireless channels that overlaps with the wireless communication between the master controller (502; 702) and one or more of the slave controllers (503; 703); is not at the same frequency as the selected wireless channel.

14. The battery management system (500, 700) of claim 7, wherein the controller (502; 702) is configured to:
cause the remote antenna (508; 708) to transmit the signalling that reserves the selected one of the plurality of wireless channels using multiple wireless protocols, at least one of which is different to a wireless protocol that is used for communication between the plurality of slave controllers (503; 703) and the master controller (502; 702).

15. A method of operating a battery management system (500, 700), the battery management system (500, 700) comprising:
a battery pack enclosure (501; 701) that contains:
a plurality of battery cells (507; 707);
a master controller (502; 702), with an associated master antenna (505; 705); and
a plurality of slave controllers (503; 703), each with an associated slave antenna (506; 706),
wherein each of the plurality of slave controllers is associated with one or more of the plurality of battery cells (507; 707);
wherein each of the plurality of slave controllers (503; 703) is configured to communicate wirelessly with the master controller (502; 702) using their respective antennas (505, 506; 705, 706) over one of a plurality of wireless channels;
wherein the battery management system (500; 700) further comprises:
a remote antenna (508; 708), which is located remote from the master antenna (505; 705) such that it is less shielded by the battery pack enclosure (501; 701) to interference that is external to the battery pack enclosure (501; 701); and
wherein the method comprises:
receiving signalling from the remote antenna (508; 708);
processing the signalling received from the remote antenna (508; 708) to determine a level of interference in the plurality of wireless channels; and
based on the determined level of interference in the plurality of wireless channels, selecting one of the plurality of wireless channels for wireless communication between the master controller (502; 702) and the plurality of slave controllers (503; 703).

## Patentansprüche

1. Batteriemanagementsystem (500, 700), umfassend:
ein Batteriepackgehäuse (501; 701), das enthält:
eine Vielzahl von Batteriezellen (507; 707);
eine Master-Steuerung (502; 702) mit einer assoziierten Master-Antenne (505; 705);
eine Vielzahl von Slave-Steuerungen (503; 703), jeweils mit einer assoziierten Slave-Antenne (506; 706), wobei jede der Vielzahl von Slave-Steuerungen (503; 703) mit einer oder mehreren der Vielzahl von Batteriezellen (507; 707) assoziiert ist;
wobei jede der Vielzahl von Slave-Steuerungen (503; 703) ausgelegt ist zum drahtlosen Kommunizieren mit der Master-Steuerung (502; 702) unter Verwendung ihrer jeweiligen Antennen (505, 506; 705, 706) über einen einer Vielzahl drahtloser Kanäle;
wobei das Batteriemanagementsystem (500; 700) ferner umfasst:
eine Fernantenne (508, 708), die sich entfernt von der Master-Antenne (505; 705) befindet, sodass sie weniger durch das Batteriepackgehäuse (501; 701) gegenüber Störungen abgeschirmt wird, die extern zu dem Batteriepackgehäuse auftreten; und
eine Steuerung (502; 702), die ausgelegt ist zum:
Empfangen einer Signalisierung von der Fernantenne (508, 708);
Verarbeiten der Signalisierung, die von der Fernantenne (508, 708) empfangen wird, um einen Störungsgrad in der Vielzahl drahtloser Kanäle zu bestimmen; und
basierend auf dem bestimmten Störungsgrad in der Vielzahl drahtloser Kanäle, Auswählen eines der Vielzahl drahtloser Kanäle zur drahtlosen Kommunikation zwischen der Master-Steuerung (502; 702) und der Vielzahl von Slave-Steuerungen (503; 703).

2. Batteriemanagementsystem (500, 700) nach Anspruch 1, wobei die Steuerung (502; 702) ausgelegt ist zum:
Verarbeiten der Signalisierung, die von der Fernantenne (508, 708) empfangen wird, um den Störungsgrad in der Vielzahl drahtloser Kanäle durch Bestimmen des Leistungspegels der Signalisierung in jedem der Vielzahl drahtloser Kanäle zu bestimmen.

3. Batteriemanagementsystem (500, 700) nach Anspruch 1 oder Anspruch 2, wobei die Steuerung ausgelegt ist zum: Verarbeiten der Signalisierung, die von der Fernantenne (508, 708) empfangen wird, um den Störungsgrad in der Vielzahl drahtloser Kanäle durch Decodieren einer Signalisierung in jedem der Vielzahl drahtloser Kanäle zu bestimmen, um zukünftige Verwendungscharakteristiken des drahtlosen Kanals zu bestimmen.

4. Batteriemanagementsystem (500, 700) nach einem der vorstehenden Ansprüche, wobei das Batteriepackgehäuse (501; 701) aus Metall ist.

5. Batteriemanagementsystem (500) nach einem der vorstehenden Ansprüche, wobei sich die Fernantenne (508) außerhalb des Batteriepackgehäuses (501) befindet.

6. Batteriemanagementsystem (700) nach einem der Ansprüche 1 bis 4, wobei sich die Fernantenne (708) innerhalb des Batteriepackgehäuses (701) befindet.

7. Batteriemanagementsystem (500, 700) nach einem der vorstehenden Ansprüche, wobei die Steuerung (502; 702) ferner ausgelegt ist zum:
Bewirken, dass die Fernantenne (508, 708) eine Signalisierung überträgt, die den ausgewählten einen der Vielzahl drahtloser Kanäle reserviert, wobei die Signalisierung optional ein Präambelsignal beinhaltet.

8. Batteriemanagementsystem (500, 700) nach Anspruch 7, wobei die Steuerung (502; 702) ausgelegt ist zum:
Bewirken, dass die Fernantenne (508, 708) die gleiche Signalisierung überträgt, die drahtlos zwischen der Master-Steuerung (502; 702) und einer oder mehreren der Slave-Steuerungen (503; 703) kommuniziert wird, um den ausgewählten einen der Vielzahl drahtloser Kanäle zu reservieren.

9. Batteriemanagementsystem (500, 700) nach Anspruch 7 oder Anspruch 8, wobei die Steuerung (502; 702) ausgelegt ist zum:
Bewirken, dass die Fernantenne (508, 708) die Signalisierung zum Reservieren des ausgewählten einen der Vielzahl drahtloser Kanäle unter Verwendung desselben Drahtlosprotokolls überträgt, wie das, das zur drahtlosen Kommunikation zwischen der Master-Steuerung (502; 702) und einer oder mehreren der Slave-Steuerungen (503; 703) verwendet wird.

10. Batteriemanagementsystem (500, 700) nach Anspruch 9, wobei die Steuerung (502; 702) ausgelegt ist zum:
Bewirken, dass die Fernantenne (508, 708) die Signalisierung zum Reservieren des ausgewählten einen der Vielzahl drahtloser Kanäle vor einer drahtlosen Kommunikation zwischen der Master-Steuerung (502; 702) und einer oder mehreren der Slave-Steuerungen (503; 703) überträgt.

11. Batteriemanagementsystem (500, 700) nach Anspruch 7, wobei die Steuerung (502; 702) ausgelegt ist zum:
Bewirken, dass die Fernantenne (508; 708) die Signalisierung, die den ausgewählten einen der Vielzahl drahtloser Kanäle reserviert, unter Verwendung eines Drahtlosprotokolls überträgt, das sich von einem Drahtlosprotokoll unterscheidet, das zur Kommunikation zwischen der Vielzahl von Slave-Steuerungen (503; 703) und der Master-Steuerung (502; 702) verwendet wird.

12. Batteriemanagementsystem (500, 700) nach Anspruch 11, wobei:
die Steuerung (502; 702) dazu ausgelegt ist, zu bewirken, dass die Fernantenne (508; 708) eine WiFi-Signalisierung überträgt, um den ausgewählten einen der Vielzahl drahtloser Kanäle zu reservieren; und
die Vielzahl von Slave-Steuerungen (503; 703) und die Master-Steuerung (502; 702) dazu ausgelegt sind, unter Verwendung von Bluetooth zu kommunizieren.

13. Batteriemanagementsystem (500, 700) nach Anspruch 11, wobei die Steuerung (502; 702) ausgelegt ist zum:
Bewirken, dass die Fernantenne (508, 708) die Signalisierung zum Reservieren des ausgewählten einen der Vielzahl drahtloser Kanäle so überträgt, dass sie mit einer drahtlosen Kommunikation zwischen der Master-Steuerung (502; 702) und einer oder mehreren der Slave-Steuerungen (503; 703) überlappt; und
wobei ein Teil der Signalisierung, die durch die Fernantenne (508; 708) zum Reservieren des ausgewählten einen der Vielzahl drahtloser Kanäle übertragen wird, der mit der drahtlosen Kommunikation zwischen der Master-Steuerung (502; 702) und einer oder mehreren der Slave-Steuerungen (503; 703) überlappt;
nicht bei der gleichen Frequenz liegt wie der ausgewählte drahtlose Kanal.

14. Batteriemanagementsystem (500, 700) nach Anspruch 7, wobei die Steuerung (502; 702) ausgelegt ist zum:
Bewirken, dass die Fernantenne (508; 708) die Signalisierung, die den ausgewählten einen der Vielzahl drahtloser Kanäle reserviert, unter Verwendung mehrerer Drahtlosprotokolle überträgt, von dem sich mindestens eines von einem Drahtlosprotokoll unterscheidet, das zur Kommunikation zwischen der Vielzahl von Slave-Steuerungen (503; 703) und der Master-Steuerung (502; 702) verwendet wird.

15. Verfahren zum Betreiben eines Batteriemanagementsystems (500, 700), wobei das Batteriemanagementsystem (500, 700) umfasst:
ein Batteriepackgehäuse (501; 701), das enthält:
eine Vielzahl von Batteriezellen (507; 707);
eine Master-Steuerung (502; 702) mit einer assoziierten Master-Antenne (505; 705); und
eine Vielzahl von Slave-Steuerungen (503; 703), jeweils mit einer assoziierten Slave-Antenne (506; 706),
wobei jede der Vielzahl von Slave-Steuerungen mit einer oder mehreren der Vielzahl von Batteriezellen (507; 707) assoziiert ist;
wobei jede der Vielzahl von Slave-Steuerungen (503; 703) ausgelegt ist zum drahtlosen Kommunizieren mit der Master-Steuerung (502; 702) unter Verwendung ihrer jeweiligen Antennen (505, 506; 705, 706) über einen einer Vielzahl drahtloser Kanäle;
wobei das Batteriemanagementsystem (500; 700) ferner umfasst:
eine Fernantenne (508, 708), die sich entfernt von der Master-Antenne (505; 705) befindet, sodass sie weniger durch das Batteriepackgehäuse (501; 701) gegenüber Störungen abgeschirmt wird, die extern zu dem Batteriepackgehäuse (501; 701) auftreten; und
wobei das Verfahren umfasst:
Empfangen einer Signalisierung von der Fernantenne (508; 708);
Verarbeiten der Signalisierung, die von der Fernantenne (508; 708) empfangen wird, um einen Störungsgrad in der Vielzahl drahtloser Kanäle zu bestimmen; und
basierend auf dem bestimmten Störungsgrad in der Vielzahl drahtloser Kanäle, Auswählen eines der Vielzahl drahtloser Kanäle zur drahtlosen Kommunikation zwischen der Master-Steuerung (502; 702) und der Vielzahl von Slave-Steuerungen (503; 703).

## Revendications

1. Système de gestion de batterie (500, 700) comprenant :
une enceinte de bloc-batterie (501 ; 701) qui contient :
une pluralité de cellules de batterie (507 ; 707) ;
un contrôleur maître (502 ; 702) ayant une antenne maîtresse associée (505 ; 705) ;
une pluralité de contrôleurs esclaves (503 ; 703), ayant chacun une antenne esclave associée (506 ; 706), chacun de la pluralité de contrôleurs esclaves (503 ; 703) étant associé à une ou plusieurs de la pluralité de cellules de batterie (507 ; 707) ;
chacun de la pluralité de contrôleurs esclaves (503 ; 703) étant configuré pour communiquer sans fil avec le contrôleur maître (502 ; 702) en utilisant ses antennes respectives (505, 506 ; 705, 706) sur l'un d'une pluralité de canaux sans fil ;
le système de gestion de batterie (500 ; 700) comprenant en outre :
une antenne distante (508, 708), qui est située à distance de l'antenne maîtresse (505 ; 705) de telle sorte qu'elle soit moins protégée par l'enceinte de bloc-batterie (501 ; 701) vis-à-vis des interférences qui sont externes à l'enceinte de bloc-batterie ; et
un contrôleur (502 ; 702) qui est configuré pour :
recevoir une signalisation en provenance de l'antenne distante (508, 708) ;
traiter la signalisation reçue de l'antenne distante (508, 708) pour déterminer un niveau d'interférence dans la pluralité de canaux sans fil ; et
sur la base du niveau déterminé d'interférence dans la pluralité de canaux sans fil, choisir l'un de la pluralité de canaux sans fil pour une communication sans fil entre le contrôleur maître (502 ; 702) et la pluralité de contrôleurs esclaves (503 ; 703).

2. Système de gestion de batterie (500, 700) selon la revendication 1, dans lequel le contrôleur (502 ; 702) est configuré pour :
traiter la signalisation reçue en provenance de l'antenne distante (508, 708) pour déterminer le niveau d'interférence dans la pluralité de canaux sans fil en déterminant le niveau de puissance de signalisation dans chacun de la pluralité de canaux sans fil.

3. Système de gestion de batterie (500, 700) selon la revendication 1 ou la revendication 2, dans lequel le contrôleur est configuré pour :
traiter la signalisation reçue en provenance de l'antenne distante (508, 708) pour déterminer le niveau d'interférence dans la pluralité de canaux sans fil en décodant la signalisation dans chacun de la pluralité de canaux sans fil pour déterminer des caractéristiques d'utilisation future du canal sans fil.

4. Système de gestion de batterie (500, 700) selon l'une quelconque des revendications précédentes, dans lequel l'enceinte de bloc-batterie (501 ; 701) est métallique.

5. Système de gestion de batterie (500) selon l'une quelconque des revendications précédentes, dans lequel l'antenne distante (508) est située à l'extérieur de l'enceinte de bloc-batterie (501).

6. Système de gestion de batterie (700) selon l'une quelconque des revendications 1 à 4, dans lequel l'antenne distante (708) est située à l'intérieur de l'enceinte de bloc-batterie (701).

7. Système de gestion de batterie (500, 700) selon l'une quelconque des revendications précédentes, dans lequel le contrôleur (502 ; 702) est en outre configuré pour :
amener l'antenne distante (508, 708) à transmettre une signalisation qui réserve celui de la pluralité de canaux sans fil qui a été choisi, la signalisation incluant éventuellement un signal de préambule.

8. Système de gestion de batterie (500, 700) selon la revendication 7, dans lequel le contrôleur (502 ; 702) est configuré pour :
amener l'antenne distante (508, 708) pour transmettre la même signalisation qui est communiquée sans fil entre le contrôleur maître (502 ; 702) et un ou plusieurs des contrôleurs esclaves (503 ; 703) afin de réserver celui de la pluralité de canaux sans fil qui a été choisi.

9. Système de gestion de batterie (500, 700) selon la revendication 7 ou la revendication 8, dans lequel le contrôleur (502 ; 702) est configuré pour :
amener l'antenne distante (508, 708) à transmettre la signalisation pour réserver celui de la pluralité de canaux sans fil qui est choisi en utilisant le même protocole sans fil que celui qui est utilisé pour une communication sans fil entre le contrôleur maître (502 ; 702) et un ou plusieurs des contrôleurs esclaves (503 ; 703) .

10. Système de gestion de batterie (500, 700) selon la revendication 9, dans lequel le contrôleur (502 ; 702) est configuré pour :
amener l'antenne distante (508, 708) à transmettre la signalisation pour réserver celui de la pluralité de canaux sans fil qui est choisi avant une communication sans fil entre le contrôleur maître (502 ; 702) et un ou plusieurs des contrôleurs esclaves (503 ; 703).

11. Système de gestion de batterie (500, 700) selon la revendication 7, dans lequel le contrôleur (502 ; 702) est configuré pour :
amener l'antenne distante (508, 708) à transmettre la signalisation qui réserve celui de la pluralité de canaux sans fil qui est choisi en utilisant un protocole sans fil qui est différent d'un protocole sans fil qui est utilisé pour une communication entre la pluralité de contrôleurs esclaves (503 ; 703) et le contrôleur maître (502 ; 702).

12. Système de gestion de batterie (500, 700) selon la revendication 11, dans lequel :
le contrôleur (502 ; 702) est configuré pour amener l'antenne distante (508 ; 708) à transmettre la signalisation WiFi pour réserver celui de la pluralité de canaux sans fil qui est choisi ; et
la pluralité de contrôleurs esclaves (503 ; 703) et le contrôleur maître (502 ; 702) sont configurés pour communiquer par Bluetooth.

13. Système de gestion de batterie (500, 700) selon la revendication 11, dans lequel le contrôleur (502 ; 702) est configuré pour :
amener l'antenne distante (508 ; 708) à transmettre la signalisation pour réserver celui de la pluralité de canaux sans fil qui est choisi de telle sorte qu'elle se chevauche avec une communication sans fil entre le contrôleur maître (502 ; 702) et un ou plusieurs des contrôleurs esclaves (503 ; 703) ; et
dans lequel une partie de la signalisation transmise par l'antenne distante (508 ; 708) pour réserver celui de la pluralité de canaux sans fil qui est choisi de telle sorte qu'elle se chevauche avec la communication sans fil entre le contrôleur maître (502 ; 702) et un ou plusieurs des contrôleurs esclaves (503 ; 703) ;
n'est pas à la même fréquence que le canal sans fil choisi.

14. Système de gestion de batterie (500, 700) selon la revendication 7, dans lequel le contrôleur (502 ; 702) est configuré pour :
amener l'antenne distante (508 ; 708) à transmettre la signalisation qui réserve celui de la pluralité de canaux sans fil qui est choisi en utilisant plusieurs protocoles sans fil, dont au moins l'un est différent d'un protocole sans fil qui est utilisé pour une communication entre la pluralité de contrôleurs esclaves (503 ; 703) et le contrôleur maître (502 ; 702).

15. Procédé de fonctionnement d'un système de gestion de batterie (500, 700), le système de gestion de batterie (500, 700) comprenant :
une enceinte de bloc-batterie (501 ; 701) qui contient :
une pluralité de cellules de batterie (507 ; 707) ;
un contrôleur maître (502 ; 702) ayant une antenne maîtresse associée (505 ; 705) ; et
une pluralité de contrôleurs esclaves (503 ; 703), ayant chacun une antenne esclave associée (506 ; 706),
chacun de la pluralité de contrôleurs esclaves étant associé à une ou plusieurs de la pluralité de cellules de batterie (507 ; 707) ;
chacun de la pluralité de contrôleurs esclaves (503 ; 703) étant configuré pour communiquer sans fil avec le contrôleur maître (502 ; 702) en utilisant ses antennes respectives (505, 506 ; 705, 706) sur l'un d'une pluralité de canaux sans fil ;
le système de gestion de batterie (500 ; 700) comprenant en outre :
une antenne distante (508 ; 708), qui est située à distance de l'antenne maîtresse (505 ; 705) de telle sorte qu'elle soit moins protégée par l'enceinte de bloc-batterie (501 ; 701) vis-à-vis des interférences qui sont externes à l'enceinte de bloc-batterie (501 ; 701) ; et
le procédé comprenant :
la réception d'une signalisation de l'antenne distante (508 ; 708) ;
le traitement de la signalisation reçue de l'antenne distante (508 ; 708) pour déterminer un niveau d'interférence dans la pluralité de canaux sans fil ; et sur la base du niveau déterminé d'interférence dans la pluralité de canaux sans fil, le choix de l'un de la pluralité de canaux sans fil pour une communication sans fil entre le contrôleur maître (502 ; 702) et la pluralité de contrôleurs esclaves (503 ; 703).
